# FASCICULE DE BREVET EUROPEEN

(11) **EP 2 105 699 B1**
(45) Date de publication et mention de la délivrance du brevet: **22.02.2017**
(21) Numéro de dépôt: 09004365.4
(22) Date de dépôt: 26.03.2009
(51) Int. Cl.: G01B 11/02

(54) **Procédé et installation de mise en lots de produits de boulangerie industrielle**
Verfahren und Anlage zur Mengenzuordnung von industriellen Backprodukten
Method and installation for placing industrial bakery products in batches

(30) Priorité: 26.03.2008 FR 0801638
(43) Date de publication de la demande: 30.09.2009
(73) Titulaire: Pattyn Bakery Division SAS, 12350 Maleville (FR)
(72) Inventeur: De la Ballina, Hélios, 12110 Aubin (FR); Dumas, Emmanuel, 12200 Villefranche de Rouergue (FR)
(74) Mandataire: Thibon, Norbert

(56) Documents cités:
- EP-A1- 0 763 470
- WO-A-2007/046763
- FR-A- 2 860 581
- US-A- 4 188 544
- US-A- 4 929 843
- US-A1- 2004 240 754
- US-A1- 2005 231 734
- US-B1- 6 328 523

## Description

L'invention concerne l'examen de produits discrets en défilement sur une bande transporteuse dans le cadre du conditionnement en lots de ces produits en bout d'une chaîne de production industrielle. Elle s'applique en particulier dans le domaine de la boulangerie et viennoiserie industrielle, ou dans toute situation similaire, quand il s'agit, par exemple, de trier les produits après leur cuisson ou leur surgélation pour les répartir en différents lots de conditionnement contenant chacun un nombre de produits déterminé. Suivant les installations, les opérations de comptage des produits servant à les regrouper par lots peuvent être ou non combinées avec des opérations simultanées de contrôle de qualité.

Le cas des produits de boulangerie industrielle représente un domaine typique dans lequel il est classique d'assurer l'examen des produits qui ont été déposés sur une bande transporteuse en faisant passer celle-ci par un poste de visiométrie, équipé d'une caméra d'acquisition d'images associée à des moyens électroniques de traitement d'image programmés pour fournir directement des signaux de commande des opérations de tri en sortie du poste de visiométrie. C'est aussi un bon exemple pour illustrer les situations où se posent les problèmes que l'invention vise à résoudre, s'agissant notamment de répondre au besoin toujours croissant de cadences de traitement élevées, au souci de limiter l'encombrement des installations, à la recherche d'une grande fiabilité des contrôles et d'une exactitude toujours accrue des comptages, pour la pleine satisfaction des clients auxquels les lots emballés sont livrés.

Il existe déjà des installations de conditionnement de produits de boulangerie industrielle qui impliquent un comptage des produits en vue de leur mise en lots par quantités prédéterminées. Une telle installation est décrite par exemple dans la demande de brevet EP 0763470 et également dans le brevet français 03 11649, publié sous la référence FR 2 860 581, ou dans la demande de brevet américaine correspondante US 2005/09960. Elle comporte un poste d'examen des produits en défilement par visiométrie en amont d'un poste de tri par lots et des moyens de traitement d'images numériques qui fournissent des informations de comptage ou dénombrement en fonction de leur localisation sur la surface de la bande transporteuse qui servent à commander la levée ou l'abaissement des différentes dents d'un peigne de tri interposé en travers de la bande transporteuse, pour livrer passage sélectivement aux produits comptabilisés pour compléter un lot en cours de remplissage. Dans le brevet français, le traitement d'image procède par analyse de contraste pour distinguer les produits présents sur la surface de la bande transporteuse.

Pour améliorer encore les conditions de la mise en lots et parfaire un comptage à la pleine satisfaction des clients acheteurs des lots, en dépit du fait que sur la bande transporteuse, les produits, croissants, pains, ou autres, se présentent en général en répartition aléatoire, sous des orientations très variables et avec souvent des chevauchements d'un produit sur un autre qui faussent les résultats des comptages. De plus, les produits sont couramment accompagnés de matières étrangères, telles que de la farine ou des pépites de chocolat, ou toute matière similaire intervenant dans leur fabrication. Ces matières s'accumulent progressivement sur la bande transporteuse et perturbent les saisies d'images et leur interprétation. Elles interdisent en particulier les examens par rétro-éclairage qui s'effectuent à travers une bande transporteuse prévue translucide et elles obligent à des réglages fréquents des conditions de fonctionnement des installations.

Pour pallier les inconvénients des techniques antérieures, notamment ceux qui viennent d'être rappelés, la présente invention prévoit essentiellement d'exploiter une information tridimensionnelle impliquant une information de hauteur des produits défilant sur la bande transporteuse. A cette fin, on recourt à un système de visiométrie dit à triangulation laser, dans lequel une caméra est orientée pour saisir sous un angle non nul l'image d'une ligne d'éclairement tracée dans son champ de vision par un faisceau lamellaire de lumière laser. De fait, les systèmes de visiométrie à triangulation laser sont connus en eux-mêmes, pour servir à recueillir des informations de volume des objets examinés. On en trouvera notamment une description détaillée dans le brevet américain US 4 188 544. D'autres documents, comme les demandes de brevet WO 2007/046763, US 2004/240754 ou US 4929843, divulguent des systèmes de visiométrie sensiblement équivalents, chacun pour des applications différentes de localisation ou de dimensionnement de pièces. Mais les moyens qui sont ainsi en eux-mêmes connus sont utiles dans le cadre de la présente invention par des dispositions foncièrement différentes, s'agissant non pas d'une analyse tridimensionnelle, mais d'opérations de comptage des produits en défilement. Le cas échéant, on cherche en plus à compter ainsi les produits quand ils reposent sur un fond sur lequel ils se distinguent mal par contraste, de façon non fiable et non régulière dans le temps.

Conformément à l'invention, le poste de visiométrie est équipé pour faire passer les produits en défilement sur la bande transporteuse sous une ligne d'éclairement projetée par un faisceau lamellaire laser transversal à la direction de déplacement de la bande transporteuse observée au moyen d'une caméra sous un angle non nul de manière à être sensible à ladite ligne d'éclairement telle que déformée par la présence de produits sur la bande transporteuse. Les moyens électroniques de traitement d'image associés sont configurés pour déduire des images acquises une information de hauteur des produits présents sur la bande en liaison avec une information de localisation sur la bande, pour comparer ladite information avec un seuil maximum de hauteur au-dessus de la bande prédéterminé en correspondance avec une hauteur nominale des produits individuels, et pour, dès lors que ladite information de hauteur est supérieure audit seuil maximum, en déduire que pour la localisation correspondante, il existe deux produits en chevauchement l'un sur l'autre et calculer automatiquement l'aire de surface de bande sur laquelle ce chevauchement s'étend.

Les moyens de comptage qui commandent les organes trieurs du poste de tri sont alors configurés pour exploiter les données obtenues en cumulant deux fois l'aire de surface du chevauchement avec les aires voisines sur lesquelles l'information de hauteur est inférieure audit seuil maximal tout en restant supérieure à un seuil minimal significatif de la présence d'un produit à comptabiliser, et en divisant le total par une valeur nominale d'aire occupée par chaque produit individuellement, en déduire un nombre de produits présents localement sur la bande.

L'invention prévoit de négliger le cas où sur une même aire de surface de la bande, il existerait plus de deux produits en chevauchement. Pour une simplification notable des calculs et des moyens les effectuant de manière automatique, on admet d'une part que la situation se produit rarement dans l'application aux produits de boulangerie et viennoiserie industrielle, on garantit que toute erreur de comptage ne pourra être que dans le sens d'un excédent de produits dans le lot correspondant, ce qui n'est pas préjudiciable au client comme le serait une erreur dans le sens d'un manque de produits par rapport au nombre attendu dans chaque lot.

Le seuil maximal de hauteur utilisé est avantageusement fixé, pour les mêmes raisons, à une valeur supérieure à la hauteur nominale des produits d'une fraction de cette hauteur nominale, par exemple de l'ordre de 20 %, ou plus généralement de 15 à 30 %.

Suivant une autre caractéristique propre à l'invention, l'information de hauteur déduite de l'examen sous triangulation laser est comparée en permanence à un seuil minimal de hauteur, déterminé pour être discriminateur de la présence d'un produit (si la hauteur déduite de l'image est supérieure à ce seuil) par rapport à la présence de traces d'une matière étrangère auxdits produits, pour lesquelles la hauteur reste inférieure à ce seuil minimal. La valeur de ce seuil minimal est avantageusement choisie en fonction de critères similaires à ceux utilisés pour le seuil maximal, en correspondance notamment avec la hauteur nominale des produits à comptabiliser. Dans la plupart des cas pratiques, le seuil minimal de hauteur pourra être fixé entre 3 et 5 millimètres pour s'affranchir de toutes les causes d'erreur venant du fond de la bande sur laquelle reposent les produits, sans qu'il soit nécessaire de modifier son réglage en cours de fonctionnement de l'installation pour la mise en lots d'un type déterminé de produits.

Suivant encore d'autres caractéristiques qui sont propres à l'invention dans son contexte, alors même qu'elles peuvent être connues en elles-mêmes dans d'autres domaines d'application de la visiométrie, il est prévu d'équiper le système de visiométrie de deux caméras disposées de façon sensiblement symétrique par rapport au plan laser orthogonal au plan de la zone de vision et passant par la ligne d'éclairement. Les informations acquises par les deux caméras en triangulation laser sont exploitées pour s'affranchir de l'incidence des zones d'ombre qui apparaissent inévitablement du fait même de l'inclinaison de l'axe de visée.

L'invention va maintenant être décrite de manière plus détaillée en se référant aux figures suivantes, dans lesquelles :
- la figure 1 illustre schématiquement un système de visiométrie à triangulation laser comprenant une seule caméra, utilisé dans une installation d'examen de produits de boulangerie industrielle ou d'industries similaires selon un premier mode de réalisation de l'invention;
- les figures 2A et 2B illustrent schématiquement le fonctionnement du système de la figure 1 ;
- la figure 3 illustre schématiquement un système de visiométrie à triangulation laser comprenant deux caméras, utilisé dans une installation d'examen de produits de boulangerie industrielle ou d'industries similaires selon un deuxième mode de réalisation de l'invention ;
- et la figure 4 illustre schématiquement une installation de tri de produits de boulangerie industrielle mettant en oeuvre le procédé selon l'invention, et incorporant le système de visiométrie à triangulation laser de la figure 3 comprenant deux caméras.

Dans ce qui suit, sans en limiter en quoi que ce soit la portée de l'invention, on se placera ci-après dans le cadre de son application préférée, sauf mention contraire, c'est-à-dire dans le cas d'une installation d'examen de produits de boulangerie industrielle, ou plus particulièrement de petits pains ou de viennoiseries.

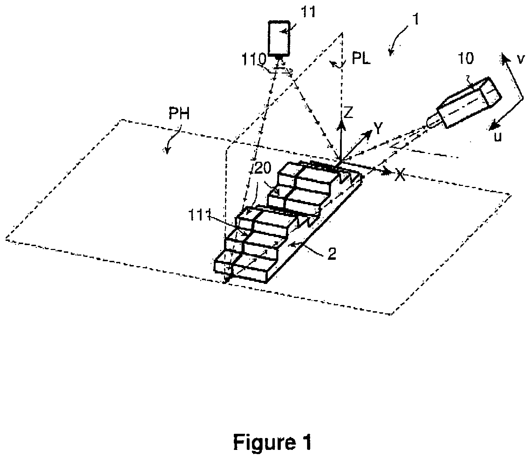

La figure 1 illustre schématiquement un système de visiométrie à triangulation laser 1 comprenant une caméra 10 et un émetteur laser 11, que l'on appellera plus simplement "laser" dans la présente description. La caméra peut notamment être du type intégrant une carte électronique de définition d'image.

Le laser 11 émet un faisceau lamellaire 110 dans un plan que l'on appellera "plan laser" PL. Selon le mode de réalisation illustré par les figures, le plan PL est défini orthogonal à un plan PH, arbitrairement horizontal. Selon l'invention, le plan PH est celui d'une zone de vision définie sur la surface d'une bande transporteuse 3 sur laquelle défilent des produits 4 à examiner. L'intersection du faisceau lamellaire 110 avec le plan PH se traduit par un trait laser 111 que l'on appellera "ligne d'éclairement" dans ce qui suit.

Les plans PL et PH et la ligne d'éclairement 111 définissent donc un trièdre XYZ, ici orthonormé. Il est toutefois à noter que le trièdre XYZ peut être quelconque sans que cela nuise à l'invention, dans la mesure où le capteur de la caméra 10 est alors configuré en conséquence.

La caméra 10 est disposée dans l'espace de façon à pouvoir acquérir, notamment, l'image de la ligne d'éclairement 111. En outre, elle est inclinée par rapport au plan PH ainsi que par rapport au plan PL. De façon préférentielle, son axe de visée V forme un angle de l'ordre de 30 degrés par rapport au plan PH.

A titre d'exemple non limitatif, on peut utiliser une caméra du commerce comprenant, dans un même boîtier, outre une optique appropriée, un capteur matriciel sensible à la longueur d'onde du laser 11 ainsi que des circuits de traitement de signaux réalisés sou la forme d'un circuit intégré unique.

Dès lors qu'un produit 4, entraîné en défilement sur la bande transporteuse 3 selon une direction sensiblement parallèle à l'axe X du trièdre défini plus haut, traverse la ligne d'éclairement 111, cette dernière est déformée sur une distance correspondant à la dimension de ce produit selon l'axe Y du trièdre XYZ, et sa déformation en tous points est représentative de la hauteur (c'est-à-dire de la dimension selon l'axe Z du trièdre XYZ) du produit 4 en tout point de sa ligne transversale éclairée par la ligne 111.

La caméra 10 acquiert des images de la ligne d'éclairement déformée, et les moyens électroniques de traitement du système de visiométrie déduisent de ces images, par une méthode de triangulation, une information de localisation du produit 4 ainsi qu'un profil de hauteur en sa partie éclairée par le laser 11. De proche en proche, avec le défilement de la bande transporteuse, un profil complet de hauteur du produit 4 peut être établi et, par combinaison de ce profil avec les informations de localisation, le volume de ce produit peut être calculé avec précision.

Il est à noter qu'un calibrage du système de visiométrie est avantageusement réalisé à la mise en place de l'installation de contrôle dont il est un composant, ainsi qu'à intervalles de temps réguliers.

Pour ce faire, on utilise avantageusement une mire d'étalonnage 2 se présentant sous la forme d'une pyramide allongée, plus précisément constituée d'une suite prédéterminée de plateaux en escaliers parallèles au plan PH, sous la référence unique 20 (voir figure 1). La mire 2 est disposée sur le plan PH de façon à ce qu'elle soit illuminée par le faisceau laser, parallèlement à l'axe Y. La ligne d'éclairement 111 se déforme au gré des variations de hauteur (axe Z) des plateaux 20 suivant l'axe Y lorsque la mire 2 défile sur la bande transporteuse au travers de la zone de vision. La comparaison de la hauteur réelle, connue, de chacun des plateaux de la mire, avec la hauteur calculée, déduite des images de la ligne d'éclairement 111 déformée acquises par la caméra 10, permet alors de calibrer l'ensemble de visiométrie à triangulation laser.

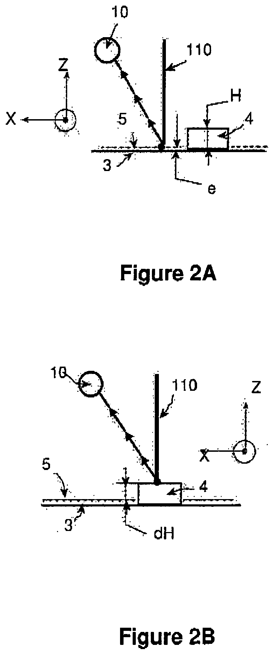

Les figures 2A et 2B illustrent schématiquement comment il est ainsi possible de mesurer la hauteur Z de produits de boulangerie industrielle 4 de façon fiable, précise et en évitant les artefacts induits par la présence d'une matière étrangère 5, dite polluante, par exemple de la farine (ou des particules de chocolat), qui se dépose sur la bande transporteuse 3 d'une installation d'examen de ces produits 4, et tapisse la bande transporteuse 3, au bout d'un intervalle de temps variable, d'une couche plus ou moins uniforme, mais de faible épaisseur e.

La bande transporteuse 3 entraîne les produits 4 suivant une direction parallèle à l'axe X. Sur la figure 2A, le faisceau laser 110 éclaire la couche de farine 5. La caméra 10 est donc censée mesurer l'épaisseur e de la couche de farine 5. En réalité, comme il vient d'être rappelé, cette épaisseur e est très faible, typiquement de l'ordre du millimètre. Aussi, on définit un premier seuil S1, minimal, de profil de hauteur, typiquement de l'ordre de quelques mm. Dans les applications principales visées par l'invention et rappelées plus haut, ce seuil sera préférentiellement, mais de manière non limitative, de l'ordre de 5 mm. Tout se passe alors comme si la ligne d'éclairement 111 du faisceau laser était confondue avec la surface de la bande transporteuse 3 que l'on suppose plane, l'épaisseur e étant considérée comme un bruit de fond éliminé.

Entraîné par la bande transporteuse 3, le produit 4 traverse le faisceau laser lamellaire 110 : figure 2B. La ligne d'éclairement 111 est alors déformée pour suivre les variations de hauteur superficielle du produit 4, ce dans les deux dimensions, directions X et Y au cours du défilement de ce produit sur la bande transporteuse 3.

Lorsque le produit 4 passe de l'état représenté sur la figure 2A à celui représenté sur la figure 2B, la caméra 10 détecte des déformations brutales de la hauteur de la ligne d'éclairement 111 au fur et à mesure que le bord avant du produit 4 coupe celle-ci. La caméra 10 va donc générer des signaux traduisant des variations de hauteur, d'une amplitude dH. Dans la pratique, l'épaisseur e étant très faible, elle peut être négligée devant cette amplitude, et l'on peut considérer qu'il y a égalité entre cette dernière et la hauteur du produit.

En d'autres termes, la variation de hauteur dH mesurée est en réalité la hauteur, H, du produit à contrôler 4 sur la bande transporteuse 3, ce malgré la présence d'une couche de farine 5. De façon plus générale, quelle que soit la nature de la matière polluante, sa couleur, le contraste de luminosité existant avec le produit à contrôler, élevé ou non, il n'existe plus d'artefacts de mesure dus à cette présence. On constate donc que l'invention atteint bien l'un des buts principaux qu'elle s'est fixés.

L'utilisation d'un tel système de visiométrie à triangulation laser permet donc d'apprécier de façon très fiable l'étendue de zones de chevauchement entre produits en liaison avec la localisation sur la bande transporteuse. Rappelons que l'on ne s'intéresse pas ici à déterminer dans sa globalité le volume des produits présents sur la bande transporteuse. Passer par le volume conduirait à un traitement des images numériques beaucoup plus complexe, alors en plus que cela rendrait possible des erreurs de sous-comptage, ce qui est inacceptable. La bonne détermination du nombre de produits à regrouper dans chaque lot se fait à l'aide de l'utilisation du seuil de hauteur dit minimal et du seuil de hauteur dit maximal, en liaison avec les informations de localisation et les calculs d'aires.

Cependant, comme il a été rappelé dans le préambule de la présente description, lorsque le produit à contrôler présente des variations brutales de reliefs, soit sur son contour, soit sur sa surface supérieure, notamment lorsqu'il existe une zone de chevauchement entre deux produits ou plus, il apparaît des "zones d'ombre" pour la caméra 10, dus au fait que ladite caméra est inclinée par rapport à la bande transporteuse 3 et par rapport au plan laser PL perpendiculaire à celle-ci. Dans ces situations, la caméra 10 ne "voit" plus l'un des flancs abrupts du relief. Dans certaines applications, cette perte de vision se révèle préjudiciable.

Aussi, dans un deuxième mode de réalisation, l'invention propose des dispositions pour pallier ce problème. Selon ce mode de réalisation, on prévoit que le système de visiométrie à triangulation laser comporte une seconde caméra 12, disposée symétriquement à la caméra 10 par rapport au plan laser PL.

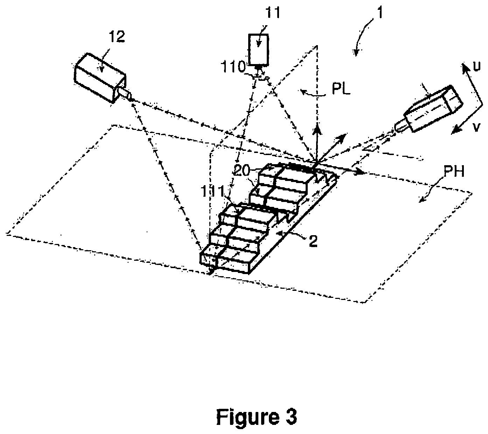

La figure 3A illustre schématiquement la configuration d'un tel système de visiométrie. Sur cette figure 3A, les éléments communs aux figures précédentes portent les mêmes références et ne seront re-décrits qu'en tant que de besoin. Comme précédemment, le système de visiométrie comprend une première caméra 10 (jouant un rôle tout à fait similaire à celle du système de la figure 1) et un émetteur laser 11 projetant un trait laser sur le plan PH, se traduisant par une ligne d'éclairement 111. De façon spécifique, le système de visiométrie comprend une seconde caméra 12, disposée symétriquement à la première caméra 10 par rapport au plan PL, également inclinée d'un angle par rapport au plan PH, de façon préférentielle d'un angle égal ou peu différent de 30 degrés. Dans un tel agencement, il apparaît clairement qu'une zone d'ombre non vue par l'une des caméras 10 ou 12 sera dans le champ de vision de l'autre caméra.

Comme dans le cas du premier mode de réalisation (figure 1), il est avantageux de procéder à une phase d'étalonnage des caméras 10 et 12. Pour ce faire, l'invention prévoit d'utiliser une mire commune 2 identique a priori à la mire 2 utilisée dans le cas illustré par la figure 1.

Pour chaque caméra 10 et 12, on opère comme expliqué plus haut. Mais en plus, une fois les deux caméras 10 et 12 calibrées séparément, on exécute une étape supplémentaire de corrélation des informations fournies par les deux caméras. Suivant cette corrélation l'invention, on utilise les informations d'étalonnage pour passer d'une caméra à l'autre comme expliqué ci-après.

On notera IMG1 et IMG2 les images d'un même produit 4 défilant sur la bande transporteuse 3, acquises respectivement par les caméras 10 et 12. Pour un pixel de l'image IMG1, de coordonnées [u1, v1, w1] dans le trièdre UVW de la caméra 10, capturé par la caméra 10, on désire trouver le pixel équivalent de l'image IMG2 capturée par la caméra 12. Ce pixel a pour coordonnées [u2, v2, w2] dans le trièdre UVW.

L'étalonnage préalable des caméras 10 et 12 et la méthode de triangulation permettent de définir respectivement les fonctions (Y1, Z1) = f1 (U1, W1) et (Y2, Z2) = f2(U2, W2) permettant de passer des pixels "images" aux caractéristiques géométriques "réelles" des produits. Pour chacune de ces fonctions, on peut définir une fonction inverse, respectivement F1 et F2 telles que (U1, W1) = F1 (X1, Y1), et (U2, W2) = F2 (X2, Y2).

Pour un pixel de coordonnées [u1, v1, w1], la fonction f1 de la caméra 10 permet donc de trouver l'élément de coordonnées [x1, y1, z1] correspondant sur le produit 4. Il suffit ensuite, grâce à la fonction inverse de la fonction F2 de la caméra 12, de rechercher le pixel de coordonnées [u2, v2, w2] correspondant à l'élément de coordonnées [x2, y2, z2] tel que z2 = z1 et y2 = y1, et tel que (u2, w2) = F2 (x2, y2).

Pour des valeurs non nulles de w1, c'est-à-dire pour tout pixel de l'image IMG1 correspondant à des éléments (x1, y1, z1) non situés sur des zones d'ombre pour la caméra 10 :
- si la valeur w2 est nulle, cela signifie que l'élément correspondant (x2, y2, z2) est sur une zone d'ombre pour la caméra 12 : on recopie alors la valeur w1 dans la valeur w2,
- si la valeur w2 est non nulle, cela signifie que l'élément correspondant (x2, y2, z2) n'est pas sur une zone d'ombre pour la caméra 12 : on peut alors, par exemple, recopier dans w2 la moyenne arithmétique des valeurs w1 et w2.

Pour des pixels de l'image IMG1 tels que w1 = 0, c'est-à-dire correspondant à des éléments placés sur des zones d'ombre pour la caméra 10, on procédera de manière similaire, mais en utilisant, cette fois, l'image IMG2 comme image initiale et la fonction F1 inverse de la fonction d'étalonnage f1 évoquée plus haut.

On procède ainsi de proche en proche pour réaliser la fusion des images IMG1 et IMG2, en utilisant un outil d'étalonnage unique.

Il est à noter que si les caméras 10 et 12 acquièrent les images de manière synchronisée, il n'en va pas de même pour la reconstitution des images ligne par ligne. Il s'ensuit, en raison du défilement de la bande transporteuse 3, qu'une même position sur ladite bande transporteuse aura donc des coordonnées v1 et v2 différentes sur les images IMG1 et IMG2. L'acquisition de chaque image étant synchronisée sur une information provenant du codeur de déplacement de la bande transporteuse 3, le décalage entre les deux images sera proportionnel à un nombre de pas du codeur.

L'utilisation de deux caméras 10 et 12 permet donc bien d'obtenir une image complète du produit 4 défilant sur la bande transporteuse 3, en éliminant tout éventuel "effet d'ombre".

Cependant, on doit bien comprendre que l'on peut recourir à d'autres algorithmes de fusion sans sortir du cadre de l'invention.

Une fois réalisée la fusion des images IMG1 et IMG2, on dispose donc d'une image complète et précise du produit 4 concerné, en particulier de la totalité de ses contours, ainsi que de la totalité de ses reliefs, et, comme il a été évoqué précédemment, de ses volumes. Ces données peuvent alors être comparées à des données théoriques issues d'un cahier des charges, dans le but d'un contrôle de qualité desdits produits 4 : formes, dimensions, taille des reliefs, etc. Il est à noter que, dans ce cas, une caméra classique, linéaire ou matricielle, peut compléter le dispositif de contrôle, par acquisition d'images en niveaux de gris renseignant sur l'état de surface desdits produits 4 (état après cuisson, par exemple).

Il est à noter que, comme il a été indiqué précédemment, l'invention permet également, par le calcul des volumes des objets détectés par les caméras 10 et 12, de dénombrer les produits 4 défilant sur la bande transporteuse 3, qu'il existe ou non des chevauchements partiels ou totaux de certains desdits produits 4.

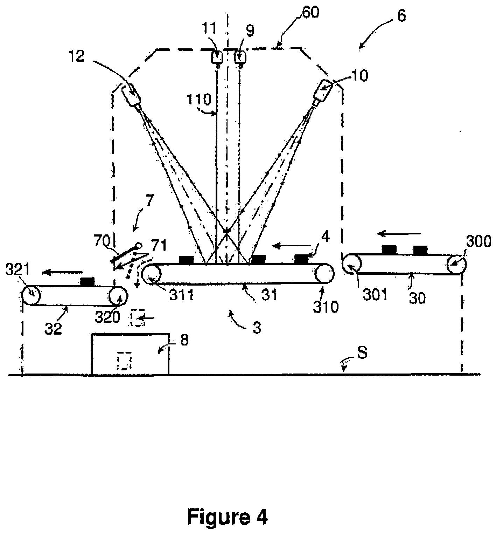

La figure 4 illustre schématiquement l'architecture complète d'une installation 6 de contrôle et de tri de produits 4 de boulangerie industrielle ou similaires mettant en oeuvre un système de visiométrie à triangulation laser du type décrit en regard de la figure 3, c'est-à-dire comprenant deux caméras 10 et 12.

L'installation 6 comprend, de façon classique, une bande transporteuse 3. Selon le mode particulier de réalisation de l'invention, représenté par la figure 5, la bande transporteuse 3 est divisée en trois parties : une bande transporteuse aval 32, une bande transporteuse intermédiaire 31, dont au moins une partie constitue une zone de vision pour les caméras 10 et 12, et une bande transporteuse amont 30, disposées en cascade dans des plans légèrement décalés en hauteur vers le bas de l'amont vers l'aval. L'ensemble est disposé dans un châssis 60 reposant sur le sol S.

Avantageusement, chacune des bandes transporteuses amont, intermédiaire, et aval, comporte des moyens d'entraînement classiques par exemple des rouleaux (respectivement 300 et 301 pour la bande transporteuse amont 30, 310 et 311 pour la bande transporteuse intermédiaire 31, 320 et 321 pour la bande transporteuse aval 32), ainsi que des moteurs (non représentés sur la figure 5).

Les produits 4 à examiner sont déposés, a priori en vrac, sur la bande transporteuse amont 30, par tout dispositif d'alimentation approprié (non représenté). Ils sont ensuite ici déversés sur la bande transporteuse 31, et traversent le faisceau lamellaire laser 110. Les caméras 10 et 12, acquièrent des images de la ligne d'éclairement 111 générée par le faisceau laser 110, ligne d'éclairement qui est déformée par les variations de relief des produits 4 défilant sur la zone de vision de la bande transporteuse 31 au travers dudit faisceau laser 110.

Les images acquises sont traitées par les moyens électroniques de traitement de signal du système de visiométrie, de la façon qui a été décrite précédemment, soit localement (dans chaque caméra 10 et 12, soit dans des circuits éloignés (non représentés). Dans tous les cas, les signaux "images" (coordonnées u, v et intensité w) sont transformés en signaux objets (coordonnées x, y, z) et envoyés à un système informatique (non représenté) pour un post-traitement.

L'installation 6 comprend également un dispositif d'aiguillage 7 et d'éjection disposé entre la bande transporteuse intermédiaire 31 et la bande transporteuse aval 32. Il peut s'agir, à titre d'exemple non limitatif, d'un dispositif à peigne, en soi analogue à ceux décrits dans le brevet français FR 2 860 581 B1. La bande transporteuse 31 peut également être du type rétractable.

Connaissant la vitesse de translation de la bande transporteuse 31 et la position latérale d'un produit 4 lorsqu'il passe dans la zone de vision (coordonnée X : figures 2A et 2B), il est tout à fait simple de calculer le temps mis par ce produit pour atteindre le dispositif d'aiguillage et d'éjection 7. Ce temps pourra aussi être calculé par l'information délivrée par une roue codeuse. Le dispositif d'aiguillage peut comprendre une plaque déflectrice unique ou une pluralité de plaques déflectrices mues chacune en rotation entre deux positions extrêmes par un actionneur autour d'un axe. Le système informatique précité élabore alors des signaux de commande sélective desdites plaques déflectrices suivant une direction parallèle à l'axe X, permettant d'orienter le produit 4 qui se présente en regard de la plaque concernée selon que ledit produit présente ou non des caractéristiques conformes à des critères préétablis.

Il peut s'agir, dans le cas où l'invention est appliquée au dénombrement des produits 4, de l'orientation sélective d'un nombre donné de produits 4 vers un dispositif classique d'emballage ou de conditionnement. Dans le cas où l'invention est appliquée à un contrôle simultané de la qualité des produits 4, il peut s'agir de l'orientation sélective, par basculement des plaques déflectrices correspondantes dans leur première position extrême, des produits jugés conformes à des critères préétablis (formes, dimensions, etc.) vers des dispositifs classiques de cuisson ou d'emballage, et de l'orientation sélective des produits jugés non- conformes auxdits critères vers une ligne de rejet, par basculement desdites plaques déflectrices correspondantes dans leur seconde position extrême.

Dans le mode de réalisation préféré décrit par la figure 4, on peut compléter le poste de visiométrie à caméras par un poste de visiométrie à caméra classique, de type linéaire ou matricielle. Cette caméra est représentée sous la référence 9. Elle permet d'acquérir des images en niveaux de gris et de compléter les informations concernant les caractéristiques des produits 4 défilant dans la zone de vision. Par ce biais, on peut contrôler les variations d'intensité lumineuse à l'intérieur de la surface du produit 4 (zone que l'on qualifiera d'utile), et uniquement à l'intérieur de celle-ci. Un tel agencement offrira, par exemple, la possibilité d'un contrôle à l'issue d'une cuisson, par analyse de l'aspect de surface des produits 4.

A la lecture de la description qui précède, on constate aisément que l'invention atteint bien les buts qu'elle s'était fixés, notamment celui de s'affranchir des erreurs d'appréciation dues à la présence de traces de matière étrangère, par exemple de farine, sur la bande transporteuse, se traduisant par des artefacts de mesure. Elle permet également de réaliser, à cadence élevée, un comptage précis et fiable des produits à délivrer triés et regroupés par lots de quantités prédéterminée, assurant notamment qu'en cas d'erreur, on privilégie les erreurs de surcomptage (un produit de plus dans le lot) aux dépens des erreurs de sous-comptage (un produit en moins dans le lot). En effet, le client dans le domaine tolère les erreurs de surcomptage alors qu'il applique des pénalités pour toute erreur de sous-comptage.

## Revendications

1. Procédé de mise en lots de produits discrets en bout d'une chaîne de production industrielle qu'ils parcourent en défilant sur une bande transporteuse à travers une zone de vision d'un poste de visiométrie, dans lequel on acquiert des images d'une ligne d'éclairement projetée sur ladite zone de vision par un faisceau lamellaire laser (110) au moyen d'une caméra (10) l'observant sous un angle non nul de manière à détecter une image de ladite ligne d'éclairement (111) telle que déformée par la présence de produits sur la bande transporteuse, **caractérisé en ce qu'**il consiste à établir de proche en proche avec le défilement de la bande transporteuse un profil complet de hauteur du produit, et à déterminer par traitement automatique d'informations de hauteur desdits produits ainsi acquises en fonction de leur localisation sur la bande transporteuse, les aires de surface de chevauchement sur lesquelles ladite information de hauteur est supérieure à un seuil maximal déterminé traduisant une probabilité de chevauchement d'au moins deux produits, et à additionner deux fois les aires desdites surfaces de chevauchement aux aires voisines sur lesquelles l'information de hauteur est inférieure audit seuil maximal tout en restant supérieur à un seuil minimal significatif de la présence d'un produit à comptabiliser, et en divisant le total par une valeur nominale d'aire occupée par chaque produit individuellement, de manière à en déduire un nombre de produits présents localement sur la bande pour commander automatiquement les organes trieurs d'un poste de regroupement desdits produits par lots les contenant en quantités prédéterminées.

2. Procédé selon la revendication 1, **caractérisé en ce que** ladite information de hauteur est en outre comparée à un seuil minimal de hauteur discriminateur de la présence d'au moins un desdits produits sur un fond de matière étrangère, telle que de la farine dans une installation de mise en lot de produits de boulangerie industrielle.

3. Procédé selon la revendication 1 ou 2, **caractérisé en ce qu'**il comporte une étape de corrélation des images acquises par ladite caméra (10) avec les images acquises par une deuxième caméra (12) disposée sensiblement symétriquement par rapport à ladite première caméra (10) par rapport au plan du faisceau lamellaire laser (110).

4. Procédé selon l'une quelconque des revendications 1 à 3, **caractérisé en ce qu'**il comporte une étape d'étalonnage desdites caméras (10, 12) au moyen d'un outil d'étalonnage unique (2).

5. Procédé selon l'une quelconque des revendications 1 à 4, **caractérisé en ce qu'**il comporte une étape de comparaison des formes et dimensions des produits (4) avec des critères de qualité préalablement établis.

6. Installation de mise en lots de produits discrets les contenant en nombre déterminé, **caractérisée en ce qu'**elle comporte :
- une bande transporteuse (31) entraînant les produits (4) en défilement à travers une zone de vision définie sur ladite bande transporteuse (31), par un système de visiométrie à triangulation laser comportant au moins une caméra (10, 12) d'observation de ladite zone de vision, des moyens d'émission d'un faisceau lamellaire laser (110), et des moyens électroniques de traitement d'image déduisant une information de hauteur des produits présents sur la bande de l'examen par ladite caméra (10, 12) de la ligne d'éclairement (111) générée par ledit faisceau laser (110) sur ladite zone de vision telle que déformée par le passage desdits produits dans ladite zone de vision et l'établissement de proche en proche avec le défilement de la bande d'un profil complet de hauteur du produit, en liaison avec des informations de localisation desdits produits sur ladite bande;
- des moyens informatiques réalisant d'une part, à partir desdites informations de localisation et de l'information de hauteur, la comparaison de ladite information de hauteur desdits produits (4) avec un seuil maximal de hauteur prédéterminé pour être représentatif de la présence d'un produit unitaire, de manière à identifier un chevauchement de produits lorsque ladite information de hauteur est supérieure audit seuil maximal, et d'autre part, à partir des résultats de ladite comparaison et d'une valeur nominale d'aire occupée par chaque produit individuellement, un calcul du nombre desdits produits (4) tenant compte de chevauchements éventuels en additionnant deux fois les aires des surfaces pour lesquelles un chevauchement a été détecté,
- des moyens d'aiguillage et de tri (7) commandés par lesdits moyens informatiques pour orien ter les produits (4) vers des zones appropriées (32, 8) en fonction des résultats de ladite comparaison et dudit calcul en dénombrement des produits.

7. Installation selon la revendication 6 **caractérisée en ce qu'**elle comporte une troisième caméra (9) pour acquérir des images en niveaux de gris desdits produits (4) et en comparer l'aspect de surface avec des critères de qualité prédéfinis.

8. Installation selon la revendication 6 ou 7, **caractérisée en ce qu'**elle est utilisée pour le traitement de produits de boulangerie industrielle.

## Patentansprüche

1. Verfahren zur Mengenzuordnung von einzelnen Produkten am Ende einer industriellen Produktionskette, die sie durchlaufen, indem sie auf einem Förderband durch einen Sichtbereich einer visiometrischen Station vorbeilaufen, wobei Bilder einer Lichtlinie, die von einem lamellenartigen Laserstrahl (110) auf den Sichtbereich projiziert wird, mittels einer Kamera (10) aufgenommen werden, die ihn unter einem Winkel ungleich null in einer Weise beobachtet, um ein Bild der Beleuchtungslinie (111), wie sie durch das Vorhandensein von Produkten auf dem Förderband verformt wird, zu detektieren, **dadurch gekennzeichnet, dass** es umfasst: nach und nach Erzeugen eines vollständigen Höhenprofils des Produkts mit dem Vorbeilaufen des Förderbands und Bestimmen der Flächen von Überlappungsoberflächen, auf denen die genannte Höheninformation größer als ein maximaler bestimmter Schwellwert ist, was in eine Überlappungswahrscheinlichkeit von wenigstens zwei Produkten übersetzt wird, durch automatische Informationsverarbeitung der auf diese Weise erlangten Informationen über die Höhe der Produkte als Funktion ihrer Position auf dem Förderband, und Addieren des Zweifachen der Flächen der genannten Überlappungsoberflächen an benachbarten Flächen, deren Höheninformationen kleiner als der maximale Schwellwert ist, wobei sie jedoch größer als ein minimaler Schwellwert bleibt, der für das Vorhandensein eines zu registrierenden Produkts bezeichnend ist, und wobei die Summe durch einen Nennwert der Fläche, die von jedem Produkt einzeln belegt wird, in einer Weise dividiert wird, dass daraus eine Anzahl von Produkten abgeleitet wird, die lokal auf dem Band vorhanden ist, um Sortiereinrichtungen einer Gruppierungsstation für die Produkte nach Chargen, welche vorgegebene Mengen enthalten, zu befehligen.

2. Verfahren nach Anspruch 1, **dadurch gekennzeichnet, dass** die Höheninformation unter anderem mit einem minimalen Höhenschwellwertdiskriminator für das Vorhandensein wenigstens eines der Produkte auf einem Boden aus Fremdmaterial, wie etwa Mehl in einer Anlage zur Mengenzordnung für industrielle Backprodukte, verglichen wird.

3. Verfahren nach Anspruch 1 oder 2, **dadurch gekennzeichnet, dass** es einen Korrelierungsschritt der von der Kamera (10) aufgenommenen Bilder mit den Bildern umfasst, die von einer zweiten Kamera (12) aufgenommen werden, die relativ zu der Ebene des lamellenartigen Laserstrahls (110) im Wesentlichen symmetrisch in Bezug auf die erste Kamera (10) angeordnet ist.

4. Verfahren nach einem der Ansprüche 1 bis 3, **dadurch gekennzeichnet, dass** es einen Schritt zum Eichen der Kameras (10, 12) mit Hilfe eines einzelnen Eichwerkzeugs (2) umfasst.

5. Verfahren nach einem der Ansprüche 1 bis 4, **dadurch gekennzeichnet, dass** es einen Schritt zum Vergleichen der Formen und Abmessungen der Produkte (4) mit früher festgelegten Qualitätsstandards umfasst.

6. Anlage zur Mengenzuordnung für einzelne Produkte, welche die bestimmte Anzahl enthält, **dadurch gekennzeichnet, dass** sie umfasst:
ein Förderband (31), das die Produkte (4) mit sich führt, wobei sie auf dem Förderband (31) durch einen Sichtbereich vorbeilaufen, der auf dem Förderband (31) von einem visiometrischen Lasertriangulationssystem definiert wird, welches wenigstens eine Kamera (10, 12) zur Beobachtung des Sichtbereichs, Mittel zum Aussenden eines lamellenartigen Laserstrahls (110) und elektronische Bildverarbeitungsmittel umfasst, welche eine Höheninformation der auf dem Band vorhandenen Produkte aus der Untersuchung der Beleuchtungslinie (111), die von dem Laserstrahl (110) in dem Sichtbereich erzeugt wird, wie sie von dem Durchgang der Produkte in dem Sichtbereich verformt wird, durch die Kamera (10, 12) ableiten und mit dem Vorbeilaufen des Bands in Verbindung mit Informationen über die Position der Produkte auf dem Band nach und nach ein vollständiges Höhenprofil des Produkts erzeugen;
- elektronische Mittel, die einerseits aus den Positionsinformationen und den Höheninformationen den Vergleich der Höheninformationen der Produkte (4) mit einem einzigen maximalen Schwellenwert der Höhe, der vorgegeben ist, so dass er für das Vorhandensein eines einheitlichen Produkts repräsentativ ist, in einer Weise realisieren, in der eine Überlappung der Produkte bestimmt wird, wenn die Höheninformation größer als der maximale Schwellwert ist, und andererseits aus den Ergebnissen des Vergleichs und einem Nennwert der von jedem Produkt einzeln belegten Fläche eine Berechnung der Anzahl der Produkte (4) unter Berücksichtigung des etwaigen Überlapps bestimmen, indem das Zweifache der Oberflächen, für die eine Überlappung detektiert wurde, addiert wird,
- Weichenstell- und Sortiermittel (7), die von den elektronischen Mitteln befehligt werden, um die Produkte (4) als Funktion der Ergebnisse des Vergleichs und der Zählungsberechnung der Produkte in Richtung der passenden Bereiche (32, 8) auszurichten.

7. Anlage nach Anspruch 6, **dadurch gekennzeichnet, dass** sie eine dritte Kamera (9) umfasst, um Grauwertbilder der Produkte (4) aufzunehmen und das Erscheinungsbild der Oberfläche mit vordefinierten Qualitätskriterien zu vergleichen.

8. Anlage nach Anspruch 6 oder 7, **dadurch gekennzeichnet, dass** sie für die Verarbeitung von industriellen Backprodukten verwendet wird.

## Claims

1. Method for grouping individual products into batches at the end of an industrial production line along which they travel on a conveyor belt through a viewing region of a visiometry station, in which method images of a line of light projected onto said viewing region by a lamellar laser beam (110) are obtained by means of a camera (10) that observes said line of light at a non-zero angle so as to detect an image of said line of light (111) as deformed by the presence of products on the conveyor belt, **characterised in that** said method consists in gradually establishing a complete height profile of the product as the conveyor belt travels past, and in determining, by automatically processing height data of said products thus obtained according to their location on the conveyor belt, the overlapping surface areas over which said height data is greater than a specified maximum threshold which expresses a likelihood that at least two products are overlapping, and in adding, twice, the value of the areas of said overlapping surfaces to the adjacent areas over which the height data is below said maximum threshold whilst still being greater than a minimum threshold that is indicative of the presence of a product to be counted, and dividing the total by a nominal value of the area occupied by each product individually, so as to derive therefrom a number of products locally present on the belt in order to automatically instruct the sorting members of a station that groups said products into batches containing said products in predetermined quantities.

2. Method according to claim 1, **characterised in that** said height data is also compared to a minimum height threshold that discerns the presence of at least one of said products against a background of foreign material, such as flour in an apparatus for grouping industrially baked products into batches.

3. Method according to either claim 1 or claim 2, **characterised in that** it comprises a step of correlating the images obtained by said camera (10) with the images obtained by a second camera (12) arranged so as to be substantially symmetrical to said first camera (10) relative to the plane of the lamellar laser beam (110).

4. Method according to any of claims 1 to 3, **characterised in that** it comprises a step of calibrating said cameras (10, 12) by means of a single calibration tool (2).

5. Method according to any of claims 1 to 4, **characterised in that** it comprises a step of comparing the shapes and dimensions of the products (4) with preset quality criteria.

6. Apparatus for grouping individual products into batches that contain said products in a given number, **characterised in that** it comprises:
- a conveyor belt (31) that moves the products (4) through a viewing region defined on said conveyor belt (31), past a laser triangulation visiometry system having at least one camera (10, 12) for observing said viewing region, means for emitting a lamellar laser beam (110), and electronic image processing means that derive a piece of height data of the products present on the belt by examining, by means of said camera (10, 12), the line of light (111) generated by said laser beam (110) on said viewing region as deformed by said products passing into said viewing region, and by gradually establishing a complete height profile of the product as the conveyor belt travels past, in combination with data relating to the location of said products on said belt;
- computer means which, on the basis of said location data and height data, compare said height data of said products (4) with a maximum height threshold that is predetermined so as to be representative of the presence of a single product, so as to identify an overlap of products when said height data is greater than said maximum threshold, and, on the basis of the results of said comparison and a nominal value of the area occupied by each product individually, calculate the number of said products (4) taking any potential overlaps into account by twice adding the value of the areas of surfaces for which an overlap has been detected,
- directing and sorting means (7) controlled by said computer means for directing the products (4) to appropriate regions (32, 8) according to the results of said comparison and of said calculation for counting the products.

7. Apparatus according to claim 6, **characterised in that** it comprises a third camera (9) for obtaining greyscale images of said products (4) and comparing the surface appearance thereof with predefined quality criteria.

8. Apparatus according to either claim 6 or claim 7, **characterised in that** it is used for processing industrially baked products.
